# FASCICULE DE BREVET EUROPEEN

(11) **EP 0 625 306 B1**
(45) Date de publication et mention de la délivrance du brevet: **07.01.1998**
(21) Numéro de dépôt: 94420142.5
(22) Date de dépôt: 16.05.1994
(51) Int. Cl.: A01N 43/56

(54) **Mélanges herbicides**
Herbizide Mischungen
Herbicidal mixtures

(30) Priorité: 19.05.1993 FR 9306271
(43) Date de publication de la demande: 23.11.1994
(60) Demande divisionnaire: 97104954.9
(73) Titulaire: RHONE-POULENC AGROCHIMIE, 69009 Lyon (FR)
(72) Inventeur: Gamblin, Alan, Centre de Recherches de, Ongar, Essex CM5 0HW (GB); Rognon, Jacques, F-30000 Nimes (FR)

(56) Documents cités:
- EP-A- 0 273 669
- EP-A- 0 531 116
- DE-A- 2 341 594
- FR-A- 2 671 457
- GB-A- 2 274 780
- CHEMICAL ABSTRACTS, vol. 117, no. 5, 3 Août 1992, Columbus, Ohio, US; abstract no. 42744k, & JP-A-04 059 706 (NIPPON NOYAKU) 26 Février 1992 & PATENT ABSTRACTS OF JAPAN vol. 16, no. 257 (C-0949) 11 Juin 1992 & DATABASE WPI Week 9215, Derwent Publications Ltd., London, GB; AN 92-118314 [14]
- CHEMICAL ABSTRACTS, vol. 116, no. 11, 16 Mars 1992, Columbus, Ohio, US; abstract no. 101131, & JP-A-03 246 204 (NIHON NAHYAKU) 1 Novembre 1991
- CHEMICAL ABSTRACTS, vol. 109, no. 19, 7 Novembre 1988, Columbus, Ohio, US; abstract no. 165724, & JP-A-63 079 804 (MITSUBISHI PETROCHEMICAL)
- CHEMICAL ABSTRACTS, vol. 115, no. 17, 28 Octobre 1991, Columbus, Ohio, US; abstract no. 177436, & ZA-A-9 000 663 (RHONE-POULENC) 31 Octobre 1990
- CHEMICAL ABSTRACTS, vol. 111, no. 21, 20 Novembre 1989, Columbus, Ohio, US; abstract no. 189596, & JP-A-01 121 203 (HOKKO CHEMICAL INDUSTRY) 12 Mai 1989

## Description

La présente invention concerne des compositions herbicides à performances améliorées.

On connaît l'herbicide, dénommé ci-après HERB1, et dont le nom chimique est le 1-CH₃ 3-[2-F 4-Cl 5-(-O-CH₂-CO-O-C₂H₅) phenyl] 4-Cl 5-OCHF₂ pyrazole. Ce composé est décrit dans les demandes de brevets européens 361114 et 443059. Cet herbicide est connu essentiellement pour son application dans la culture du riz immergé ou du riz de montagne, et dans les surfaces où aucune sélectivité n'est requise comme les marais, les vergers, les régions montagneuse et les bords de routes. Cet herbicide est aussi connu comme étant particulièrement actif même à de très faibles doses, en sorte que son efficacité est assez sensible à de faibles variations de doses, et que l'association avec d'autres herbicides est assez imprévisible dans ses résultats. D'ailleurs, les brevets européens précités ne suggèrent aucun mélange herbicide particulier.

Il a maintenant été trouvé que l'on pouvait obtenir des compositions herbicides à hautes performances et sélectives vis-à-vis des céréales, grâce à des mélanges de HERB1 avec certains herbicides particuliers. D'autres avantages de la présente invention apparaîtront au cours de la description qui va suivre, notamment la bonne activité des compositions selon l'invention sur les mauvaises herbes des céréales, spécialement les mauvaises herbes constituant un problème économique sérieux.

Plus précisément, l'invention concerne les compositions herbicides caractérisées en ce qu'elles comprennent comme matière active un mélange comprenant HERB1 (I) et (II) le Diflufenican.

Selon un autre aspect de l'invention, les compositions selon l'invention sont des compositions comprenant une quantité synergistiquement active d'un mélange comprenant HERB1 (I) et (II) le Diflufenican.

Le Diflufenican est le composé de nom chimique N-(2,4-difluorophenyl) 2-[3-(trifluoromethyl) phenoxy)] pyridine carboxamide.

La proportion pondérale de composé (I) par rapport au composé (II) dans les composition selon l'invention est généralement comprise entre 0,5 et 0,04 de préférence entre 0,06 et 0,3.

Les compositions herbicides selon l'invention contiennent habituellement 0,5 à 95 % de matières actives.

Il peut s'agir de compositions extemporanées, ou diluées, ou encore de compositions concentrées, ou compositions dites «prêtes à l'emploi», c'est-à-dire prêtes pour la commercialisation.

Les compositions selon l'invention peuvent comprendre en outre tous les additifs ou adjuvants habituels des compositions phytosanitaires, notamment des supports, des tensioactifs, des agents d'adhérence, des agents dispersants.

Les compositions selon l'invention peuvent être sous forme solides ou liquides, sous forme de solutions ou de suspensions ou d'émulsions ou de concentrés émulsionnables.

Par le terme "support", dans le présent exposé, on désigne une matière organique ou minérale, naturelle ou synthétique, avec laquelle les matières actives sont associées pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est désirable pour favoriser la dispersion des matières actives dans l'eau et leur bonne application sur les végétaux.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de la mise en formulation.

Parmi les compositions, on peut citer de manière générale les compositions solides ou liquides, mais les compositions liquides sont preférées, tant en raison de leur commodité de mise en oeuvre qu'en raison de leur simplicité de fabrication.

Comme formes de compositions solides, on peut citer les poudres pour poudrage ou dispersion (à teneur en composés actifs pouvant aller jusqu'à 100 %) et les granulés, notamment ceux obtenus par extrusion, par compactage, par imprégnation d'un support granulé, par granulation à partir d'une poudre (la teneur en composés actifs dans ces granulés étant entre 1 et 80 % pour ces derniers cas).

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matières actives, les émulsions ou solutions prêtes à l'application contenant, quant à elles, 0,01 à 20 % de matières actives.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui conviennent particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matières actives, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, de composition de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les associations choisies.

Les compositions peuvent le plus souvent contenir deux herbicides régulateurs de croissance définis ci-avant (association binaire) ou trois (association ternaire) ou même quatre (association quaternaire).

L'invention concerne également un procédé de traitement des cultures destiné à protéger ces cultures contre les mauvaises herbes et/ou à améliorer les rendements, caractérisé en ce que l'on applique sur les feuilles des végétaux une dose efficace et non phytotoxique d'une composition selon l'invention.

Selon le procédé de l'invention, on applique à la surface devant être traitée, c'est-à-dire à la surface infestée ou susceptible d'être infestée par des mauvaises herbes, notamment des mauvaises herbes nuisibles aux céréales, des compositions herbicides comprenant les matières actives (I) et (II) définies ci-dessus, ces matières actives étant appliquées à la dose de 3 à 25 g/ha pour la matière active (I) (c'est-à-dire l'herbicide HERB1), de préférence de 5 à 15 g/ha, et à la dose de 30 à 150 g/ha, de préférence entre 50 et 100 g/ha pour le Diflufenican.

Parmi les cultures auxquelles les compositions selon l'invention sont applicables, les céréales sont les principales cultures concernées, notamment le blé, l'orge, l'avoine, le seigle et leurs hybrides; le mélange à base de Bromoxynil est en outre particulièrement approprié au désherbage du maïs. Outre la bonne sélectivité des compositions selon l'invention vis-à-vis des céréales, celles-ci présentent en outre une bonne activité pour les cultures infestées ou susceptibles d'être infestées de gaillet (*Galium Aparine*). Cette mauvaise herbe est un problème particulièrement difficile à résoudre car très peu de produits herbicides la détruisent avec un haut pourcentage d'activité. Or, il suffit de deux plantes par mètre carré pour réduire le rendement des céréales. La véronique (*Veronica Hederifolia*) constitue un autre problème difficile à résoudre, car c'est une mauvaise herbe qui lève très tôt à l'automne, qui lève très vite et se développe même pendant l'hiver, en sorte qu'on ne peut pas attendre le printemps pour le détruire.

Le procédé peut être mis en oeuvre par utilisation d'une composition prête à l'emploi, ou par mélange extemporané juste avant l'emploi des différentes matières actives (tank mix). La composition peut également être formée in situ par applications successives sur la feuille des diverses matières actives.

L' exemple suivant donné à titre non limitatif illustre l'invention et montre comment elle peut être mise en oeuvre. Cet exemple montre, pour certaines mauvaises herbes, un effet particulièrement significatif. Cet exemple correspond à des cas choisis de mauvaises herbes contre lesquelles il est difficile de lutter.

### Exemple 1

On a traité des parcelles de blé d'hiver et d'orge d'hiver comprenant également diverses mauvaises herbes. Le traitement a été effectué à l'automne après la levée de la culture et des mauvaises herbes.

La composition herbicide a été obtenue par un mélange extemporané, dans la cuve de dilution à l'eau, d'une suspension concentrée d'HERB1 et d'une suspension concentrée de Diflufenican.

Le traitement a été effectué en comparaison avec deux traitements mettant en oeuvre chacun de ces deux herbicides à sa propre dose telle que mise en oeuvre dans le mélange.

On a observé, en fin d'hiver, les taux de destruction suivants, exprimés en pourcentage :

| Matière active | (I) seul | Diflufenican | Mélange |
|---|---|---|---|
| Dose de matière(s) active(s) en g/ha | 6 | 50 | 6 + 50 |
| Taux de destruction, en pourcentage, du Gaillet = Galium Aparine | 65 | 65 | 95 |

En fin d'hiver, on a observé une destruction à 98 % du gaillet, ainsi que les autres résultats suivants :

| Matière active | (I) seul | Diflufenican | Mélange |
|---|---|---|---|
| Dose de matière(s) active(s) en g/ha | 6 | 50 | 6 + 50 |
| Taux de destruction, en pourcentage, de la matricaire = Matricaria Inodora | 53 | 33 | 95 (Colby:69) |
| Taux de destruction, en pourcentage, du coquelicot = Papaver Rhoeas | 45 | 60 | 96 (Colby:78) |

## Revendications

1. Compositions herbicides caractérisées en ce qu'elles comprennent comme matière active un mélange comprenant HERB1 (I), connu sous le nom chimique de 1-CH₃ 3-[2-F 4-Cl 5-(-O-CH₂-CO-O-C₂H₅) phenyl] 4-Cl 5-OCHF₂ pyrazole, et Diflufenican (II).

2. Compositions selon la revendication 1 comprenant une quantité synergistiquement active d'un mélange comprenant HERB1 (I) et Diflufenican (II).

3. Compositions selon la revendication 1 comprenant une proportion pondérale de composé (I) par rapport au composé (II) comprise entre 0,04 et 0,5, de préférence entre 0,06 et 0,3.

4. Compositions herbicides selon l'une des revendications 1 à 3 contenant 0,5 à 95 % de matières actives.

5. Procédé de traitement des cultures destiné à protéger ces cultures contre les mauvaises herbes et/ou à améliorer les rendements, caractérisé en ce que l'on applique sur les feuilles des végétaux une dose efficace et non phytotoxique d'une composition selon l'une des revendications 1 à 4.

6. Procédé selon la revendication 5 dans lequel on applique à la surface devant être traitée, c'est-à-dire à la surface infestée ou susceptible d'être infestée par des mauvaises herbes, des compositions herbicides comprenant les matières actives (I) et (II), ces matières actives étant appliquées à la dose de 3 à 25 g/ha pour la matière active (I) (c'est-à-dire l'herbicide HERB1), de préférence de 5 à 15 g/ha, et à la dose de 30 à 150 g/ha, de préférence entre 50 et 100 g/ha pour le Diflufenican.

7. Procédé selon l'une des revendications 5 ou 6 dans lequel on traite une culture de blé, ou orge, ou avoine, ou seigle.

## Claims

1. Herbicidal compositions, characterized in that they comprise, as active ingredient, a mixture comprising HERB1 (I), known under the chemical name of 1-CH₃-3-[2-F-4-Cl-5-(-O-CH₂-CO-O-C₂H₅)phenyl]-4-Cl-5-OCHF₂-pyrazole, and diflufenican (II).

2. Compositions according to claim 1, comprising a synergistically active amount of a mixture comprising HERB1 (I) and diflufenican (II).

3. Compositions according to claim 1, comprising a ratio by weight of compound (I) to compound (II) between 0.04 and 0.5, preferably between 0.06 and 0.3.

4. Herbicidal compositions as claimed in one of claims 1 to 3 containing 0.5 to 95 % of active ingredients.

5. Process for treating crops with the intention of protecting these crops against weeds and/or of improving the yields, characterized in that an effective and non-phytotoxic dose of a composition according to one of claims 1 to 4 is applied to the leaves of the plants.

6. Process according to claim 5, in which herbicidal compositions which comprise the active ingredients (I) and (II) are applied to the surface to be treated, that is to say to the surface which is infested, or susceptible of being infested, with weeds, these active ingredients being applied at a dose of 3 to 25 g/ha in the case of active ingredient (I) (that is to say herbicide HERB1), preferably of 5 to 15 g/ha, and at the dose of 30 to 150 g/ha, preferably between 50 and 100 g/ha, in the case of diflufenican.

7. Process according to one of claims 5 or 6, in which a wheat, barley, oat or rye crop is treated.

## Patentansprüche

1. Herbicide Zusammensetzungen, dadurch gekennzeichnet, daß sie als Wirkstoff ein Gemisch enthalten, das enthält:
(I) Herb1, das unter der chemischen Bezeichnung 1-CH₃-3-[2-F-4-Cl-5-(-O-CH₂-CO-O-C₂H₅)-phenyl]-4-Cl-5-OCHF₂-pyrazol bekannt ist, sowie
(II) Diflufenican.

2. Zusammensetzungen nach Anspruch 1, die eine synergistisch wirksame Menge eines Gemischs enthalten, das Herb1 (I) und Diflufenican (II) enthält.

3. Zusammensetzungen nach Anspruch 1, die einen Gewichtsanteil an Verbindung (I), bezogen auf die Verbindung (II), enthalten, der im Bereich von 0,04 bis 0,5 und vorzugsweise im Bereich von 0,06 bis 0,3 liegt.

4. Herbicide Zusammensetzungen nach einem der Ansprüche 1 bis 3, die 0,5 bis 95 Gew.-% Wirkstoffe enthalten.

5. Verfahren zur Behandlung von Pflanzenkulturen, das dazu dient, diese Pflanzenkulturen gegen Unkräuter zu schützen und/oder die Erträge zu verbessern, dadurch gekennzeichnet, daß auf die Blätter der Pflanzen eine wirksame und nicht phytotoxische Dosis einer Zusammensetzung nach einem der Ansprüche 1 bis 4 aufgebracht wird.

6. Verfahren nach Anspruch 5, wobei auf die zu behandelnde Fläche, d.h., auf die von Unkraut befallene oder von Unkrautbefall bedrohte Fläche herbicide Zusammensetzungen, welche die Wirkstoffe (I) und (II) enthalten, aufgebracht werden, wobei diese Wirkstoffe in einer Dosis von 3 bis 25 g/ha und vorzugsweise in einer Dosis von 5 bis 15 g/ha für den Wirkstoff (I) (d.h., das Herbizid Herb1) und in einer Dosis von 30 bis 150 g/ha und vorzugsweise in einer Dosis von 50 bis 100 g/ha für Diflufenican angewandt werden.

7. Verfahren nach Anspruch 5 oder 6, wobei eine Weizen-, Gerste-, Hafer- oder Roggenkultur behandelt wird.
